# EUROPÄISCHE PATENTSCHRIFT

(11) **EP 2 178 064 B1**
(45) Veröffentlichungstag und Bekanntmachung des Hinweises auf die Patenterteilung: **13.09.2017**
(21) Anmeldenummer: 09172733.9
(22) Anmeldetag: 12.10.2009
(51) Int. Cl.: G08G 1/16

(54) **VERFAHREN ZUM OPTIMALEN WEITERLEITEN VON MELDUNGEN BEI CAR-TO-X-KOMMUNIKATION**
METHOD FOR OPTIMAL FORWARDING OF REPORTS IN CAR TO X COMMUNICATION
PROCÉDÉ DE TRANSMISSION OPTIMALE D'ALERTES DANS UNE COMMUNICATION CAR-TO-X

(30) Priorität: 20.10.2008 DE 102008052382
(43) Veröffentlichungstag der Anmeldung: 21.04.2010
(73) Patentinhaber: Siemens Aktiengesellschaft, 80333 München (DE)
(72) Erfinder: Kasslatter, Fritz, 3003, Gablitz (AT); Pohl, Alfred, 2130, Mistelbach (AT); Karacan, Ömer, 1230, Wien (AT)
(74) Vertreter: Maier, Daniel Oliver

(56) Entgegenhaltungen:
- EP-A- 1 441 321
- DE-A1-102006 029 525
- MIN-TE SUN ET AL: "GPS-based message broadcast for adaptive inter-vehicle communications" VEHICULAR TECHNOLOGY CONFERENCE, 2000. IEEE VTS FALL VTC 2000. 52ND SEPT. 24-28, 2000, PISCATAWAY, NJ, USA,IEEE, Bd. 6, 24. September 2000 (2000-09-24), Seiten 2685-2692, XP010525075 ISBN: 978-0-7803-6507-0
- CHAWLA MOHIT ET AL: "Beaconless Position-based Routing with Guaranteed Delivery for Wireless Ad hoc and Sensor Networks" ZIDONGHUA XUEBAO - ACTA AUTOMATICA SINICA, KEXUE CHUBANSHE, BEIJING, CN, Bd. 32, Nr. 6, 1. November 2006 (2006-11-01), Seiten 846-855, XP002454069 ISSN: 0254-4156
- KORKMAZ G ET AL: "Black-Burst-Based Multihop Broadcast Protocols for Vehicular Networks" IEEE TRANSACTIONS ON VEHICULAR TECHNOLOGY, IEEE SERVICE CENTER, PISCATAWAY, NJ, US, Bd. 56, Nr. 5, 1. September 2007 (2007-09-01), Seiten 3159-3167, XP011192627 ISSN: 0018-9545

## Beschreibung

### Technisches Gebiet

Die vorliegende Erfindung betrifft ein Verfahren zum optimalen Weiterleiten von Meldungen in einem funktechnisch eingeschränkten Raum, insbesondere bei so genannter Car-to-X-Kommunikation. Eine Weiterleitung von Meldungen wird dabei von Stationen durchgeführt, wobei die Station sowohl Sender als auch Empfänger von Meldungen sind.

### Stand der Technik

Vor allem im letzten Jahrzehnt ist es zu einer raschen Entwicklung und Verbreitung von drahtloser Kommunikation und Funktechnologien (z.B. Wireless LAN, UMTS, etc.) gekommen. Insbesondere aufgrund eines steigenden Fahrzeugaufkommens wurde die drahtlose Kommunikation auch für Automobilhersteller interessant, um damit eine Kommunikation zwischen Fahrzeugen sowie zwischen Fahrzeugen und Infrastruktur - also eine so genannte Car-to-X-Kommunikation - zu ermöglichen. Die möglichen Anwendungen für Car-to-X-Kommunikation reichen dabei von reiner Unterhaltung (z.B. Telefonieren, Chat, Kurzmitteilungen, etc.) über verbesserte Navigation und Fahrerassistenz bis hin zu einem selbstorganisierenden Verkehr (z.B. Warnmeldungen, Information über Straßenzustand, etc.).

Bei der Car-to-X-Kommunikation, insbesondere bei einer Anwendung im Sicherheitsbereich, werden daher Daten und Informationen zwischen Fahrzeugen oder zwischen Fahrzeugen und Infrastruktur (z.B. Ampel, Verkehrsschildern, etc.) über eine Funktechnologie wie z.B. Wireless LAN oder UMTS ausgetauscht. Die Fahrzeuge sowie Infrastrukturelemente (z.B. Ampeln, Verkehrsschilder, etc.) werden dabei als sendende und/oder empfangende Stationen verwendet.

Gerade eine Weiterleitung von Meldungen wie beispielsweise Warnmeldungen, Informationen über den Straßenzustand, etc. für z.B. eine Gefahrenreduktion muss dabei möglichst rasch erfolgen und sollte möglichst vollständig alle betroffenen Fahrzeuge bzw. Verkehrsteilnehmer erreichen (z.B. jene Fahrzeuge, die sich einer Gefahrensituation wie z.B. einem Unfall, schlechte Straßenverhältnisse, etc. nähern). Ziel ist dabei, dass von den Meldungen mindestens eine kritische Menge an Fahrzeugen bzw. Verkehrsteilnehmern erreicht wird, damit ein Folgeschaden (z.B. weitere Unfälle, etc.) vermieden werden kann.

Für Car-to-X-Kommunikation werden beispielsweise Funktechnologien wie UMTS, GPRS, Wireless LAN nach den Standard IEEE 802.11 WLAN Standard, etc. eingesetzt, wie dies beispielsweise vom CAR 2 CAR Communication Consortium in der Schrift "CAR 2 CAR Communication Consortium Manifesto" vom 28.08.2007 unter http://www.car-to-car.org beschrieben wird. Dabei weisen die Stationen (Fahrzeuge, Infrastrukturelemente, etc.) allerdings nur eine eingeschränkte Reichweite auf. Beim Einsatz von Wireless LAN-Verbindungen auf der Basis des IEEE 802.11 Standard beträgt diese Reichweite zirka einige hundert Meter. Befinden sich zwei oder mehr Stationen innerhalb dieser Kommunikationsreichweite, werden sie automatisch zu einem dynamischen und temporären mobilen Netzwerk, einem so genannten Ad-hoc-Netzwerk verbunden. Innerhalb des Ad-hoc-Netzes kann jede Station Sender und Empfänger von Meldungen sein, wobei die Meldungen bei der Car-to-X-Kommunikation mittels so genanntem "multihopping" weitergeleitet werden.

Das von den Stationen gebildete Ad-hoc-Netz für die Car-to-X-Kommunikation stellt damit ein verteiltes, dynamisches und sich selbst organisierendes, temporäres mobiles Netz zum Weiterleiten von Meldungen dar - allerdings in einem funktechnisch eingeschränkten Raum. Die funktechnischen Einschränkungen werden beispielsweise von vielen Stationen, einer geringen Reichweite der einzelnen Stationen, einer geringen Bandbreite und/oder einer begrenzten Anzahl an Funkkanälen bewirkt. Damit eine Weiterleitung von Meldungen effizient und effektiv durchgeführt wird, sollte ein so genanntes Verstopfen ("flooding") des Funkkanals z.B. durch Versand redundanter Meldungen verhindert werden, da sonst kein Raum für einen Versand von weiteren Meldungen vorhanden ist. Im Gegensatz zu anderen Kommunikationsnetzen (z.B. Mobilfunknetz, etc.) kann bei der Car-to-X-Kommunikation durch eine Bildung des dynamischen und temporären Ad-hoc-Netzes zwischen den Stationen bei Auftreten eines Flooding nicht von einer bekannte Netztopologie und einer darauf aufbauende Planung für eine alternative Weiterleitung von Meldungen ausgegangenen werden. Eine Methode zum Weiterleiten der Nachrichten hängt daher nicht nur von den Positionen der Stationen ab, sondern muss auch geeignet sein, rasch Änderungen in einer Topologie des Ad-hoc-Netzwerks zu bewältigen.

Um ein Verstopfen des Funkkanals zu verhindern und optimale Wege für eine Weiterleitung von Meldungen zu finden, können beispielsweise Ansätze aus der Informationstechnologie (IT) mit positionsabhängigen Zusatzinformationen gekoppelt. Dazu werden z.B. bekannte Routing- und Graphentheorien aus der so genannten vermaschten Netzwerktheorie herangezogen und auf dynamische Stationen (z.B. Fahrzeuge) und statische Stationen (z.B. Infrastrukturelemente wie z.B. Ampeln, Verkehrsschilder, etc.) angewandt, wobei die Weiterleitung von Meldungen im Ad-hoc-Netz der Car-to-X-Kommunikation aus Sicht der IT-netztechnischer Sicht mit den im Internet eingesetzte Verfahren gesehen wird.

So kann eine möglichst verstopfungsfreie Weiterleitung von Meldungen bei der Car-to-X-Kommunikation auf Verfahren wie z.B. Dynamic Source Routing (DSR), Ad-Hoc On-demand Distance Vector Routing (AODV), Highly Dynamic Destination-Sequenced Distance-Vector Routing (DSDV) oder Greedy Perimeter Stateless Routing (GPSR) basieren. Dabei ist Dynamic Source Routing (DSR), welche beispielsweise in Roth, Jörg: Mobile Computing, 1. Auflage 2002, dpunkt.verlag beschrieben wird, ein Routingprotokoll, welches in mobilen, vermaschten Netzwerken eingesetzt wird. Das Ad-Hoc On-demand Distance Vector Routing (AODV), welches z.B. in Tanenbaum Andrew S.: Computernetzwerke, 4. überarbeitete Auflage 2003, Pearson Studium, Kapitel 5.2 beschrieben ist, stellt ein Topologie basiertes, reaktives Verfahren zum Weiterleiten von Meldungen dar, d.h. Ziele für eine Weiterleitung werden erst bei Bedarf ermittelt. Highly Dynamic Destination-Sequenced Distance-Vector Routing (DSDV), welches aus Perkins, C. E. and Bhagwat, P., In proceedings of ACM SIGCOMM '94, pp. 234-244, August 1994 bekannt ist, und Greedy Perimeter Stateless Routing (GPSR), das beispielsweise in Karp, B., Geographic Routing for Wireless Networks, Ph.D. Dissertation, Harvard University, Cambridge, MA, Oktober 2000. beschrieben wird, stellen ebenfalls Verfahren zur Weiterleitung von Meldungen in mobilen Ad-Hoc-Netzwerken dar, wobei GPSR beispielsweise ein Verfahren darstellt, mit welchem Datenpakete in einem spontan aufgebauten Rechnernetzwerk an ihr Bestimmungsziel gelotst werden sollen.

Als weitere, mögliche Methoden stellen noch z.B. GeoGRID - geocasting protocol for mobile ad hoc networks aus der Schrift "W.-H- Liao, Y.-C. Tseng, K-.-L. Lo, and J.-P. Sheu. Journal of Internet Technology, 1(2): 23.32, 2000." und das in der Schrift "GeoTORA: A Protocol for Geocasting in Mobile Ad Hoc Networks, Young-Bae Ko, Dept. of Computer Science Texas A&M University College Station, TX 77843,3112, USA" dar, um Meldungen durch ein mobiles Ad-Hoc-Netzwerk zu schleusen.

Allerdings sind die genannten Verfahren in erster Linie für Rechnernetzwerke oder das Internet entwickelt worden. Daher hat sich bei ihrem Einsatz für Car-to-X-Kommunikation als nachteilig erwiesen, dass von diesen Verfahren bei Car-to-X-Kommunikation beispielsweise wesentliche Parameter des Funkkanals, welche insbesondere aus der hochdynamischen Umgebung resultieren, nicht berücksichtigt werden. Insbesondere aus bei Lösungsansätzen aus der Graphentheorie wird ein vorherige Vernetzung der Stationen (z.B. Fahrzeuge, Infrastrukturelemente, etc.) vorausgesetzt, wodurch ein rasches und zuverlässiges Weiterleiten von Meldungen beeinträchtigt wird, da durch die Mobilität eines Großteils der Stationen (z.B. Fahrzeuge) laufend Anpassungen an Änderungen des gebildeten Netzes vorgenommen werden müssten.

Vom CAR 2 CAR Communication Consortium wird ebenfalls in der Schrift "CAR 2 CAR Communication Consortium Manifesto" vom 28.08.2007, welche unter http://www.car-to-car.org verfügbar ist, ein Verfahren zur Weiterleitung von Meldungen in der Car-to-X-Kommunikation beschrieben. Bei den in dieser Schrift offenbarten Weiterleitungsmethoden für Meldungen werden je nach Anwendung der Car-to-X-Kommunikation (z.B. Warnhinweise, Sicherheitsmeldungen, Unterhaltung, Navigation, etc.) vier Arten der Weiterleitung von Meldungen unterschieden: geografische Unicast- bzw. Punkt-zu-Punktkommunikation, topologisch bezogene Broadcast- bzw. Mehrpunktkommunikation, geografisch bezogene Broadcast- bzw. Mehrpunktkommunikation und geografische Anycast-Kommunkation, wobei für die Kommunikation zwischen den Stationen auf Wireless LAN nach dem IEEE 802.11 Standard eingesetzt wird. Jede dieser vier Arten der Weiterleitung von Meldungen basiert auf unterschiedliche Algorithmen zur Meldungsübertragung - so wird beispielsweise für die geografische Unicast-Kommunikation ein so genanntes Greedy forwarding verwendet, während z.B. die geografisch bezogene Broadcast-Kommunikation auf einem so genannten simple flooding-Algorithmus mit Detektion von Doppelmeldungen basiert.

Aber auch von den in der Schrift "CAR 2 CAR Communication Consortium Manifesto" vom 28.08.2007 dargestellten Methoden werden nicht aller für den Funkkanal wesentlichen Parameter aufgrund der hochdynamischen Umgebung berücksichtigt werden. Es werden zwar mögliche Kontrollmechanismen wie z.B. Überwachen der Bandbreite des Funkkanals, Überlastungskontrolle, Weiterleitung bzw. Übertragung nach Meldungspriorität, etc. beschrieben, um eine Verstopfungswahrscheinlichkeit des Funkkanals zu reduzieren, wodurch allerdings Geschwindigkeit und Zuverlässigkeit des Weiterleitens von Meldungen über mehrere Station beeinträchtigt wird. Außerdem wird durch die beschriebenen Methoden ein redundantes Versenden von Meldungen nicht unterbunden.

Aus der Schrift DE 10 2006 029 525 A1 ist ebenfalls ein Verfahren zur Weiterleitung von Informationen in einem drahtlosen Adhoc-Netzwerk wie z.B. bei Car-to-X-Kommunikation bekannt. Bei diesem Verfahren wird das Wieder- bzw. Weitersenden einer empfangenen Information derart geplant, dass eine Planzeit für das Wiedersenden der Information proportional zu einer Signalstärke ist, mit welcher die Information von einem Empfangsknoten empfangen wurde. Dabei korreliert jeder Bereich der Signalstärke mit einer eindeutigen Planzeit - d.h. je höher die Signalstärke umso länger wird die Planzeit für das Weitersenden der Information. Auf diese Weise wird zwar die Anzahl der (weiter)sendenden Stationen und damit die Verstopfungswahrscheinlichkeit des Funkkanals reduziert, aber es wird ein redundantes Versenden der Information nur bedingt unterbunden, da die Planzeit fix zugeordnet ist. Außerdem wird durch das in der Schrift DE 10 2006 029 525 A1 offenbarte Verfahren nur bedingt, eine für die Weiterleitung optimale bzw. optimal positionierte Station ermittelt.

Weiterhin sind aus der Schrift MIN-TE SUN et al.: "GP-Based Message Broadcast for Adaptive Inter-vehicle Communications" und aus der Schrift EP 1 441 321 A1 Verfahren für eine Informationsübertragung zwischen mobilen Station bzw. mittels so genannten Car-to-Car-Verbreitung bekannt. Dabei werden für die Weiterleitung von Information von einer sendenden oder von empfangenden Stationen (z.B. mittels Global Positioning System bestimmter) Positionsdaten verwendet. Diese Positionsdaten werden entweder von der sendenden Station genutzt, um in die versendende Information eine Identifikation für einen potentiellen Kandidaten für die Weiterleitung zu inkludieren, oder es werden Positionsdaten der sendenden Station zur Nutzung durch die empfangenden Station in die Information eingefügt. Bei beiden Verfahren besteht damit allerdings der Nachteil, dass nur bedingt eine für die Weiterleitung optimale bzw. optimal positionierte Station ermittelt.

### Darstellung der Erfindung

Der Erfindung liegt daher die Aufgabe zugrunde, ein Verfahren anzugeben, durch welches rasch und zuverlässig Meldungen in einem funktechnisch eingeschränkten Raum über mehrere Stationen weitergeleitet werden, ein Versand von redundanten Meldungen verhindert wird und für den Versand optimal positionierte Stationen festgestellt werden.

Die Lösung dieser Aufgabe erfolgt durch ein Verfahren der eingangs angegebenen Art, wobei von jeder empfangenden Station, welche innerhalb einer Reichweite einer sendenden Station gelegen ist, aus einer Signalstärke der empfangenen Meldungen in Kombination mit einer periodischen Aktualisierung einer Umgebungsinformation auf Basis einer sogenannten Bakeninformation selbsttätig eine jeweilige Position innerhalb der Reichweite der sendenden Station ermittelt wird. Durch die Bakeninformation werden zumindest Positionsdaten, Fahrtrichtung, Geschwindigkeit und Signalstärke zwischen benachbarten Stationen ausgetauscht. Von jeder Station wird ein Weiterleitungsverhalten der benachbarten Stationen überwacht. Wenn innerhalb einer vorgegebenen Zeitspanne von keiner der benachbarten Stationen eine empfangene Meldung weitergeleitet wird, wird eine Weiterleitung der empfangenen Meldung nur von jener empfangenden Station selbst durchgeführt, von welcher anhand der Signalstärke und der Umgebungsinformation festgestellt wird, dass sie am Rand der Reichweite der sendenden Station gelegen ist. Dabei wird die Zeitspanne bis zur Weiterleitung der empfangenen Meldung in Abhängigkeit von der Signalstärke der empfangenden Meldung bestimmt.

Der Hauptaspekt der erfindungsgemäßen Lösung besteht darin, dass auf einfache und effiziente Weise Meldungen rasch und zuverlässig weitergeleitet und ein Versand von redundanten Meldungen vermieden wird, da eine empfangene Meldung nur von jener Station weitergesendet wird, welche am Rand der Reichweite der sendenden Station gelegen ist. Das bedeutet, die am weitesten von der sendenden Station entfernte Station innerhalb der Reichweite, von welcher eine Meldung noch fehlerfrei empfangen worden ist, wird zu einer neuen sendenden Station. Die Ermittlung dieser neuen sendenden Station erfolgt einerseits auf Basis der Signalstärke der empfangenen Meldungen und andererseits anhand der Umgebungsinformation - z.B. auf Basis der sogenannten Bakeninformation, durch welche Daten wie beispielsweise Positionsangaben, Fahrtrichtung, Geschwindigkeit, Signal stärke, etc. zwischen benachbarten Station ausgetauscht werden können.

Von jeder Station wird ein Weiterleitungsverhalten der benachbarten Stationen überwacht und dadurch selbsttätig festgestellt, ob die eigene Station der am besten geeignete bzw. optimale Kandidat für die Weiterleitung einer Meldung ist. Dabei kann beispielsweise bei der Car-to-X-Kommunikation noch eine Ausbreitungsrichtung für die weiterzuleitende Meldung berücksichtigt werden, da z.B. nicht alle Stationen, welche innerhalb der Reichweite der sendenden Station gelegen sind und von denen damit die Meldung empfangen worden ist, von der Meldung betroffen sind. So ist z.B. eine Meldung über eine Gefahren- oder Unfallstelle nur für jene Stationen bzw. Fahrzeuge interessant, welche in eine Richtung der Gefahren- oder Unfallstelle auf einer selben Fahrspur bewegen. Die Meldung kann daher beispielsweise in einer so genannten (verkehrs-) flussaufwärts orientierten Richtung bezogen auf die jeweilige Fahrspur weitergeleitet werden, wobei als (verkehrs-)flussaufwärts eine Richtung entgegen einer Bewegungsrichtung der Fahrzeuge auf der jeweiligen Fahrspur angesehen wird. Die am besten geeignete Station für eine Weiterleitung der Meldung ist dann z.B. jene Station, welche am weitesten (verkehrs-)flussaufwärts innerhalb der Reichweite der sendenden Station gelegen ist und damit zur sendenden Station den größten Abstand innerhalb der Reichweite aufweist.

Damit wird, insbesondere bei einer Car-to-X-Kommunikation eine Meldung (z.B. Warnhinweis, Sicherheitsmeldung zu einer Verkehrs- oder Gefahrensituation) rasch, zuverlässig und Ressourcen schonend weitergeleitet. Ein Verstopfen eines Funkkanals durch den Versand von mehrfach redundanten Meldungen wird auf diese einfache Weise ebenfalls vermieden. Zusätzlich wird vom erfindungsgemäßen Verfahren vorteilhafter Weise keine vorherige Vernetzung der Stationen vorausgesetzt, womit es sehr einfach in hochdynamischen Umgebungen wie z.B. bei der Car-to-X-Kommunikation einsetzbar ist. Das Verfahren erfordert nur eine periodische Aktualisierung einer Umgebungsinformation wie dies beispielsweise bei der Car-to-X-Kommunikation durch ein sogenanntes periodisches Bakensignal geschieht.

Weiterhin wird von jeder Station ein Weiterleitungsverhalten der benachbarten Stationen überwacht. Wird innerhalb einer vorgegebenen Zeitspanne von keiner der benachbarten Stationen die empfangene Meldung weitergeleitet, so wird eine Weiterleitung der empfangenen Meldung von der Station selbst durchgeführt. Auf diese Weise wird sichergestellt, dass eine Meldung von einer Station innerhalb der Reichweite der sendenden Station weitergeleitet wird, wobei die Zeitspanne bis zur Weiterleitung der empfangenen Meldung in Abhängigkeit von der Signalstärke der empfangenen Meldung bestimmt wird.

Die Signalstärke stellt dabei ein Maß für die Entfernung von der sendenden Station innerhalb der Reichweite dar. Damit wird erreicht, dass bevorzugt am Rand der Reichweite gelegene Stationen die Weiterleitung der Meldung übernehmen. Ein gegenseitiges Überwachen bewirkt das nur die jeweils am besten geeignete Station die Meldung versendet. Wird die Meldung nicht innerhalb der Zeitspanne ausgesendet, so wird die Weiterleitung von der am zweitbesten geeigneten Station übernommen und so weiter. Dadurch werden auf einfache Weise ein redundanter Versand von Meldungen und ein Verstopfen des Funkkanals verhindert.

Das gegenseitige Überwachen von benachbarten Stationen kann beispielsweise bei einer Weiterleitung der Meldung in eine bestimmte Ausbreitungsrichtung (z.B. flusswärts, etc.) auf jene benachbarten Stationen innerhalb der Reichweite eingeschränkt sein, welche in Richtung dieser Ausbereitungsrichtung gelegen sind, da diese Stationen als für die Weiterleitung besser geeignet betrachtet werden. So können beispielsweise von einer Station bei der Car-to-X-Kommunikation insbesondere benachbarte Stationen, welche weiter (verkehrs-)flussaufwärts gelegen sind (z.B. hinter der jeweiligen Station bzw. dem jeweiligen Fahrzeug fahrende andere Station bzw. Fahrzeuge, etc.), überwacht werden. Von der Station wird die Meldung nur dann weitergeleitet, wenn von keiner der überwachten und als besser geeignete angesehenen Stationen innerhalb der Reichweite die Meldung nach Ablauf der Zeitspanne versandt worden ist.

Es ist vorteilhaft, wenn für eine Bestimmung der jeweiligen Position der empfangenden Station innerhalb der Reichweite der sendenden Station eine Differenz zwischen der empfangene Signalstärke der Meldung und einer bekannten mindestens notwendiger Empfangsleistung der empfangenden Station verwendet wird. Denn aus dieser Differenz kann auf einfache Weise eine Position einer Station innerhalb der Reichweite einer sendenden Station abgeleitet werden. So kann beispielsweise angenommen werden, dass einen Station nahe bei der sendenden Station gelegen ist, wenn diese Differenz zwischen gemessener Signalstärke der Meldung und der notwendigen Empfangsleistung der empfangenden Station relativ groß ist. Je kleiner diese Differenz ist, umso weiter entfernt wird sich z.B. die Station von der sendenden Station befinden. Auch wenn beispielsweise im urbanen Bereich eine Schwächung der Signalstärke einer Meldung zeitlich stark variieren kann, so ist ein zeitlicher Mittelwert dieser Schwächung ein gutes Maß für die Entfernung der empfangenden Station von der sendenden. Eine Anpassung von Schätzverfahren in Abhängigkeit von der jeweiligen Umgebung für den zeitlichen Mittelwert kann sehr einfach z.B. bei Passieren von Infrastrukturelementen (z.B. Verkehrsschildern, Ampeln, mobilen Elementen, etc.) vorgenommen werden.

Es ist günstig, wenn zusätzlich eine Bestimmung einer Entfernung der empfangenden Station von der sendenden Station mit Hilfe eines so genannten Global Navigation Satellite System oder GNSS durchgeführt wird. Auf diese vorteilhafte Weise kann die Positionsbestimmung einer Station innerhalb der Reichweite einer sendenden Station genauer durchgeführt werden. Die Position einer Station wird dabei z.B. zuerst aus der Signalstärke der empfangenen Meldung von der Station selbsttätig abgeleitet und kann dann vom GNSS unterstützt und/oder verfeinert werden, damit von der am besten geeigneten Station - d.h. jene Station am Rand der Reichweite, die am weitesten von der sendenden Station entfernt ist - die Weiterleitung durchgeführt wird. Das GNSS kann aber auch zum weiteren Optimieren der Weiterleitung verwendet werden.

So können beispielsweise durch die Bestimmung der Position einer jeweiligen Station mittels GNSS und durch z.B. mittels Bakeninformation erhaltene Positionsangaben von benachbarten Stationen Entfernungen zwischen den benachbarten Stationen von dieser Station selbst ermittelt werden. Da die empfangene Signalstärke der Meldung mit einer Entfernung von der sendenden Station geringer wird, können z.B. damit besser geeignete Stationen für eine Weiterleitung identifiziert werden. So können z.B. auf diese einfache Weise von einer Station jene benachbarten Stationen ermittelt werden, welche in einer bestimmten Ausbreitungsrichtung für die Meldung (z.B. flussaufwärts, etc.) weiter von der sendenden Station entfernt gelegen sind und von denen trotzdem die Meldung mit einer noch ausreichenden Signalstärke empfangen worden ist.

Weiters kann beispielsweise durch eine mit Kartendaten abgeglichene Positionsinformation für eine Station die Weiterleitung einer Warn- oder Gefahrenmeldung derart gestaltet werden, dass diese Meldung nur von Stationen (z.B. Fahrzeugen) empfangen wird, welche sich auf eine Gefahrenstelle zu bewegen. Damit kann auf einfache Weise verhindert werden, dass eine Meldung in einer Richtung bzw. zu Stationen (z.B. Fahrzeugen) transportiert wird, welche von der Gefahrensituation nicht betroffen sind.

Eine bevorzugte Fortbildung der Erfindung sieht auch vor, dass die Sendeleistung einer Meldung von der sendenden Station anhand einer Priorität der Meldung bestimmt wird. Die Sendeleistung einer Meldung wird dabei an ihre Wichtigkeit bzw. Dringlichkeit angepasst. So werden z.B. lebensrettende Meldung wie z.B. Warnhinweise, Gefahrenmeldungen, etc., welche der Sicherheit dienen, mit einer hohen Priorität und damit mit einer größeren Sendeleistung versendet als andere Meldung wie z.B. Navigationsinformation, etc. Damit werden lebensrettende Meldungen bevorzugt ausgesendet und rascher weitergeleitet. Zusätzlich können von diesen Meldungen andere niederpriore zu Weiterleitung anstehende Meldungen überholen. Es ist außerdem vorteilhaft, wenn eine Entscheidung über die Weiterleitung der Meldung durch einen Typ der Station selbst oder durch den Typ der benachbarten Station bestimmt wird. Als Typen von Stationen werden z.B. bei Car-to-X-Kommunikation Fahrzeuge (z.B. Lastkraftwagen, Personenkraftwagen) und/oder so genannte Road Side Units (RSU) eingesetzt.

Road Side Units (RSU) sind Infrastrukturelemente, welche an fixen Positionen entlang von Straßen und Autobahnen oder an bestimmten Orten wie z.B. Tankstellen, Parkplätzen, Raststellen, usw. angebracht sind. RSUs sind dabei mit zumindest einer Einrichtung (z.B. Antenne, etc.) für drahtlose, mobile Kommunikation über kurze Strechen (z.B. Wireless LAN) ausgestattet. Zusätzlich können RSUs auch für einen Zugang zu anderen Kommunikationsnetzen (z.B. Infrastrukturnetzen, etc.) ausgerüstet sein.

Durch die Entscheidung welcher Typ der Station - also Fahrzeug oder RSU - besser für eine Weiterleitung geeignet ist, kann die Übertragung einer Meldung zusätzlich optimiert werden, da beispielsweise eine RSU beispielsweise eine bessere und selektivere Reichweite z.B. durch eine höher montierte Antenne, Richtcharakteristik, etc. aufweist. Auch eine Berücksichtung des Typs der benachbarten Station kann die Übertragung von Meldungen weiter beschleunigen und optimieren. Dabei wird der benachbarten Station - z.B. einer RSU, welche eine größere Reichweite oder auf die Straße abgestimmte Sendeeigenschaften, etc. aufweist; einen Lastkraftwagen mit hoch montierter Antenne; ein Einsatzfahrzeug mit von der Gefahrensituation weg gerichteter Antenne, usw. der Vortritt beim Versenden gelassen. D.h. von der empfangende Station, von der festgestellt worden, dass sie am Rand der Reichweite der sendenden Station gelegen ist, wird erkannt, dass eine benachbarte Station ein besserer Weiterleiter für die Meldung ist. Von der empfangenden Station wird daher eine kurze Zeitspanne (z.B. einige Millisekunden) gewartet, ob die Meldung vom besseren Weiterleiter versendet wird.

Zweckmäßigerweise werden für einen Versand von Meldungen Antennen mit Richtcharakteristik, insbesondere so genannte Smart Antennas, eingesetzt, von welchen der Versand der Meldungen in zumindest eine bevorzugte Richtung gelenkt wird. Die Richtcharakteristik wird abhängig von einem gewünschten Zielgebiet (z.B. Fahrtrichtung der Fahrzeuge, eine oder mehrere Fahrstreifen einer Straße, etc.) für die Meldungen eingestellt, wodurch vermieden werden kann, dass von Stationen Meldungen erhalten werden, von welchen sie nicht oder nur geringfügig betroffen sind. Ein Ausrichten der Richtcharakteristik der Antennen auf ein Zielgebiet kann beispielsweise durch digitale Karten und gegebenenfalls mit Hilfe eines so genannten elektronischen Horizonts unterstützt werden, so dass z.B. die Sendeleistung auf Kurvenfahrten ausgerichtet werden kann.

### Kurzbeschreibung der Zeichnung

Die Erfindung wird nachfolgend in schematischer und beispielhafter Weise anhand von Figuren erläutert. Es zeigen:
- Fig. 1: beispielhaft das erfindungsgemäße Verfahren für ein optimales Weiterleiten von Meldungen anhand Car-to-X-Kommunikation
- Fig. 2: schematisch einen beispielhaften Ablauf des erfindungsgemäßen Verfahrens für ein optimales Weiterleiten von Meldungen

### Ausführung der Erfindung

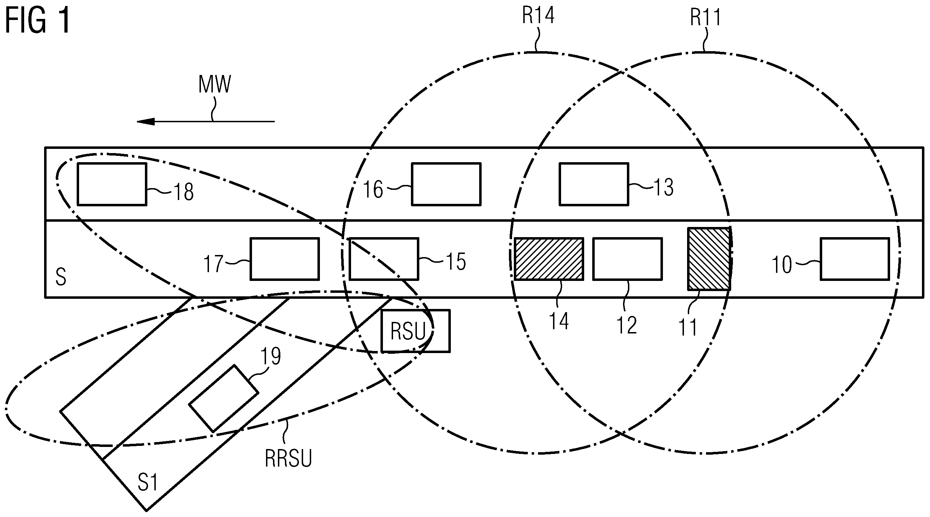

In Figur 1 wird in beispielhafter und schematischer Weise das erfindungsgemäße Verfahren für ein optimales Weiterleiten von Meldungen in einem funktechnisch eingeschränkten Raum anhand von Car-to-X-Kommunikation erläutert.

Figur 1 zeigt eine Straße S mit zwei Fahrbahnen und einer Seitenstraße S1 ebenfalls mit zwei Fahrbahnen. Auf der Straße S und der Seitenstraße S1 sind Fahrzeuge 10 bis 19 unterwegs, welche gleichzeitig sendende und empfangende Stationen für die Car-to-X-Kommunikation sind. An einer Einmündung der Seitenstraße S1 in die Straße S befindet sich eine Infrastrukturkomponente RSU oder eine so genannte Road Side Unit wie z.B. eine Ampel, ein Verkehrszeichen, etc., welche für Car-to-X-Kommunikation ausgerüstet ist.

Bei der Car-to-X-Kommunikation werden von den Fahrzeugen 10 bis 19 z.B. regelmäßig Daten durch Aussenden der so genannten Bakeninformation ausgetauscht. Dadurch ist den Fahrzeugen 10 bis 19 beispielsweise eine Entfernung zu den jeweiligen Nachbarfahrzeugen 10 bis 19 bekannt, da in der Bakeninformation eine z.B. mittels Global Positioning System (GPS) ermittelte Fahrzeugposition mitgeschickt wird. Zusätzlich kann die gesendete Bakeninformation z.B. ein Geschwindigkeit eines jeweiligen Nachbarfahrzeugs 10 bis 19 zur Ermittlung einer relativen Geschwindigkeit zum jeweiligen Nachbarfahrzeug 10 bis 19, eine Fahrtrichtung eines jeweiligen Nachbarfahrzeugs 10 bis 19, aus welcher festgestellt werden kann, ob sich das jeweilige Fahrzeug auf eine Position zu bewegt oder sich von dieser wegbewegt, und/oder die aktuelle Sendeleistung eines sendenden Fahrzeugs 10 bis 19 beinhalten. Aus der in der Bakeninformation mitgeschickten aktuellen Sendeleistung des jeweiligen benachbarten Fahrzeugs 10 bis 19 kann beispielsweise von einem Empfänger (z.B. Fahrzeug 10 bis 19, Infrastrukturkomponente RSU) und aus der aus der Bakeninformation ermittelten Entfernung des jeweiligen Nachbarfahrzeugs 10 bis 19 eine Signaldämpfung zum jeweiligen benachbarten Fahrzeugs 10 bis 19 und damit eine Reichweite und die Entfernung aller jeweiligen benachbarten Fahrzeuge 10 bis 19 ermittelt werden.

Wird beispielsweise ein Verkehrsfluss auf der ersten Fahrbahn der Straße S z.B. durch ein verunfalltes oder defektes Fahrzeug 11 gestört, so soll vom verunfallten bzw. defekten Fahrzeug 11 eine Dringlichkeitsmeldung an aller hinterherfahrenden Fahrzeuge 12, 14, 15, 17 und 19 gesendet werden. Das verunfallte bzw. defekte Fahrzeug 11 weist dabei als sendende Station eine Reichweite R11 auf.

Die Dringlichkeitsmeldung soll dabei in eine Ausbreitungsrichtung MW, d.h. in Richtung der auf die Position des verunfallten bzw. defekten Fahrzeug 11 zufahrenden Fahrzeuge 12, 14, 15, 17 und 19 gesendet werden, wobei eine erste Fahrtrichtung der Fahrzeuge 12, 14, 15 und 17, welche sich auf der ersten Fahrbahn der Straße S auf das verunfallte bzw. defekte Fahrzeug 11 zu bewegen, in der Folge auch als (verkehrs-) flussabwärts bezeichnet wird. Die Fahrzeuge 13, 16 und 18 bewegen sich auf der zweiten Fahrbahn der Straße S in eine zweite Fahrtrichtung, welche von der Position des verunfallte bzw. defekte Fahrzeug 11 wegführt und in der Folge als (verkehrs-)flussaufwärts bezeichnet. Diese zweite Fahrtrichtung entspricht auch der Ausbreitungsrichtung MW der Dringlichkeitsmeldung.

Vom verunfallte bzw. defekte Fahrzeug 11 wird z.B. über den Unfall oder die Behinderung einen Dringlichkeitsmeldung ausgesandt, wobei dem verunfallte bzw. defekte Fahrzeug 11 z.B. aufgrund der Bakeninformation bekannt ist, dass andere Fahrzeuge 10, 12, 13, 14 innerhalb seiner Reichweite R11 sind und dass daher von diesen die Meldung funktechnisch wiederholt bzw. weitergeleitet werden kann. Sollte innerhalb einer vorgegebenen Zeitspanne im Millisekundenbereich die Meldung von keinem benachbarten Fahrzeug 10, 12, 13, 14 weitergesandt werden, so wird die Meldung vom verunfallte bzw. defekte Fahrzeug 11 wiederholt.

Von der Dringlichkeitsmeldung werden funktechnisch die Fahrzeuge 10, 12, 13, 14 erreicht, welche sich innerhalb der Reichweite R11 des verunfallte bzw. defekte Fahrzeug 11 befinden. Entsprechend dem erfindungsgemäßen Verfahren wird nun von jedem dieser Fahrzeuge 10, 12, 13, 14 selbsttätig entschieden, ob das jeweilige Fahrzeug 10, 12, 13, 14 selbst am günstigsten für eine Weiterleitung der Meldung - d.h. am Rand der Reichweite R11 des verunfallte bzw. defekte Fahrzeug 11 - gelegen ist.

Von einem erstes Fahrzeug 10 innerhalb der Reichweite R11 wird beispielsweise mit Hilfe der Bakeninformation sowie anhand der Signalstärke der Dringlichkeitsmeldung selbst festgestellt, dass es vor dem verunfallte bzw. defekte Fahrzeug 11 gelegen ist und sich von dessen Position wegbewegt. Vom ersten Fahrzeug 10 innerhalb der Reichweite R11 wird daher erkannt, dass es für eine Weiterleitung der Dringlichkeitsmeldung eher ungeeignet ist.

Von einem zweiten Fahrzeug 12 und einem dritten Fahrzeug 13 wird ebenfalls die Dringlichkeitsmeldung empfangen. Dabei kann vom zweiten Fahrzeug 12 aufgrund der Signalstärke der empfangenen Dringlichkeitsmeldung beispielsweise in Kombination mit der Bakeninformation erkannt werden, dass von der Dringlichkeitsmeldung auch das dritte Fahrzeug 13 und eine viertes Fahrzeug 14 erreicht wird. Vom zweiten Fahrzeug 12 wird dabei auch festgestellt, dass sich sowohl das dritte Fahrzeug 13 als auch das vierte Fahrzeug 14 weiter flussaufwärts - d.h. an einer für die Weiterleitung günstigeren Position befinden. Vom zweiten Fahrzeug 12 wird daher einen vorgegebene Zeitspanne (z.B. 2 bis 5 Millisekunden) abgewartet, ob die Dringlichkeitsmeldung weitergesandt wird.

Ebenso wie das zweite Fahrzeug 12 wird vom dritten Fahrzeug 13 festgestellt, dass innerhalb der Reichweite R11 des verunfallte bzw. defekte Fahrzeugs 11 das vierte Fahrzeug 14 an einer günstigeren Position zur Weiterleitung gelegen ist. Vom dritten Fahrzeug 13 wird daher ebenfalls eine vorgegebene Zeitspanne (z.B. 2 bis 5 Millisekunden), welche z.B. in Abhängigkeit von der Signalstärke der empfangenen Dringlichkeitsmeldung verringert werden kann, gewartet, ob die Dringlichkeitsmeldung von einer günstiger gelegenen Station (z.B. Fahrzeug 14, etc.) innerhalb der Reichweite R11 weitergeleitet wird.

Vom vierten Fahrzeug 14 wird nun anhand der Signalstärke der Dringlichkeitsmeldung gegebenenfalls in Kombination mit der Bakeninformation festgestellt, dass seine Position am Rande der Reichweite R11 des verunfallte bzw. defekte Fahrzeugs 11 gelegen ist. D.h. vom vierten Fahrzeug 14 wird erkannt, dass von weiter flussaufwärts befindlichen Fahrzeugen 15, 16 die Dringlichkeitsmeldung nicht empfangen worden ist, da sich diese außerhalb der Reichweite R11 des verunfallte bzw. defekte Fahrzeugs 11 bewegen. Damit wird vom vierten Fahrzeug 14 die Dringlichkeitsmeldung weitergeleitet, da es am günstigsten gelegen ist. Von zweiten und dritten Fahrzeug 12 und 13 wird der Versand der Meldung überwacht bzw. eine vorgegebene Zeitspanne im Millisekundenbereich gewartet. Wird die Dringlichkeitsmeldung vom vierten Fahrzeug 14 nicht weitergesandt, so wird der Versand zuerst vom dritten Fahrzeug 13 übernommen worden. Wird auch von diesem die Meldung nicht innerhalb der vorgegebenen Zeitspanne, welche vom zweiten Fahrzeug 12 abgewartet wird, versandt, so wird die Meldung vom zweiten Fahrzeug 12 nach Ablauf der Zeitspanne weitergeleitet.

Das vierte Fahrzeug 14, von welchem die Dringlichkeitsmeldung nun weitergeleitet worden ist, weist eine Reichweite R14 auf. Innerhalb dieser Reichweite R14 befinden sich neben dem verunfallte bzw. defekte Fahrzeugs 11, von welchem die Meldung gesandt worden ist, das zweite und das dritte Fahrzeug 12, 13 sowie ein fünftes Fahrzeug 15, ein sechstes Fahrzeug 16 und die Infrastrukturkomponente RSU. Damit wird die weitergeleitete Dringlichkeitsmeldung von den Fahrzeugen 11, 12, 13, 15, 16 und von der Infrastrukturkomponente RSU empfangen.

Vom verunfallte bzw. defekte Fahrzeug 11 wird erkannt, dass von ihm die Dringlichkeitsmeldung versandt worden ist. Vom zweiten und dritten Fahrzeug 12, 13 wird festgestellt, dass von ihnen die Dringlichkeitsmeldung bereits empfangen worden ist, da sich ihre Positionen weiter flussabwärts befinden. Damit sind sowohl das verunfallte bzw. defekte Fahrzeug 11 als auch das zweite und dritte Fahrzeug 12, 13 für eine Weiterleitung der Dringlichkeitsmeldung ungeeignet bzw. die Meldung wird von diesen Fahrzeugen 11, 12, 13 nicht weitergeleitet werden.

Für eine Weiterleitung der Dringlichkeitsmeldung sind daher das fünfte Fahrzeug 15, das sechste Fahrzeug 16 sowie die Infrastrukturkomponente RSU interessant. Vom sechsten Fahrzeug 16 wird bei der selbsttätigen Entscheidung über ein Weiterleiten der Dringlichkeitsmeldung erkannt, dass einerseits das fünfte Fahrzeug 15 und andererseits die Infrastrukturkomponente RSU günstiger für die Weiterleitung der Meldung gelegen sind.

Vom fünften Fahrzeug 15 wird anhand der Signalstärke der empfangenen Dringlichkeitsmeldung zwar festgestellt, dass es sich am Rand der Reichweite R14 des vierten Fahrzeugs 14 befindet und damit am günstigsten für die Weiterleitung gelegen ist. Vom fünften Fahrzeug 15 wird aber z.B. anhand von Bakeninformation auch erkannt, dass innerhalb der Reichweite R14 des vierten Fahrzeugs 14 auch eine Infrastrukturkomponente RSU gelegen ist.

Die Infrastrukturkomponente RSU weist aufgrund einer stationären Installation eine bessere Voraussetzung (z.B. Funkrichtung, Sendeleistung, Höhe der Antennenanbringung, etc.) für das Weiterleiten von Dringlichkeitsmeldungen auf. Zusätzlich ist in der beispielhaften Darstellung des erfindungsgemäßen Verfahrens die Infrastrukturkomponente RSU an der Einmündung der Seitenstraße S1 in die Straße S angebracht. Die Infrastrukturkomponente RSU weist damit zusätzlich den Vorteil auf, dass durch ihre Reichweite RRSU - beispielsweise durch Einsatz von Antennen mit Richtcharakteristik - die Dringlichkeitsmeldung in der Straße S flussaufwärts und in der Seitenstraße S1 weitergeleitet werden kann.

Da vom fünften Fahrzeug 15 die Infrastrukturkomponente RSU innerhalb der Reichweite R14 des vierten Fahrzeugs 14 erkannt worden ist, wird der Infrastrukturkomponente RSU vom fünften Fahrzeug 15 der Vorrang beim Weiterleiten der Dringlichkeitsmeldung überlassen. Von der Infrastrukturkomponente RSU wird die Dringlichkeitsmeldung innerhalb ihrer Reichweite RRSU ausgesandt, wodurch von der Meldung auch die weiteren Fahrzeuge 17, 18 flussabwärts in der Straße S und ein Fahrzeug 19 in der Seitenstraße S1 erreicht werden. Sollte allerdings von der Infrastrukturkomponente RSU die Meldung nicht weitergesendet werden, so wird z.B. nach Abwarten einer vorgegebenen Zeitspanne (z.B. 2 bis 5 Millisekunden) die Weiterleitung der Dringlichkeitsmeldung vom fünften Fahrzeug 15 übernommen, damit von der Meldung auch die restlichen Fahrzeuge 17, 18, 19 in der Straße S bzw. in der Seitenstraße S1 erreicht werden.

Bei der Weiterleitung beispielsweise auch berücksichtigt werden, dass eines der Fahrzeuge 10 bis 19 aufgrund seiner Typ (z.B. Lastkraftwagen, Einsatzfahrzeug, etc.) oder Bauart (z.B. Fahrzeughöhe, etc.) besser für eine Weiterleitung von Dringlichkeitsmeldungen geeignet ist. So kann beispielsweise einem Lastkraftwagen - ähnlich wie einer Infrastrukturkomponente RSU - der Vorrang beim Versand von Meldungen überlassen werden, da bei diesem z.B. die Antenne höher montiert ist oder eine Richtcharakteristik flussaufwärts aufweist.

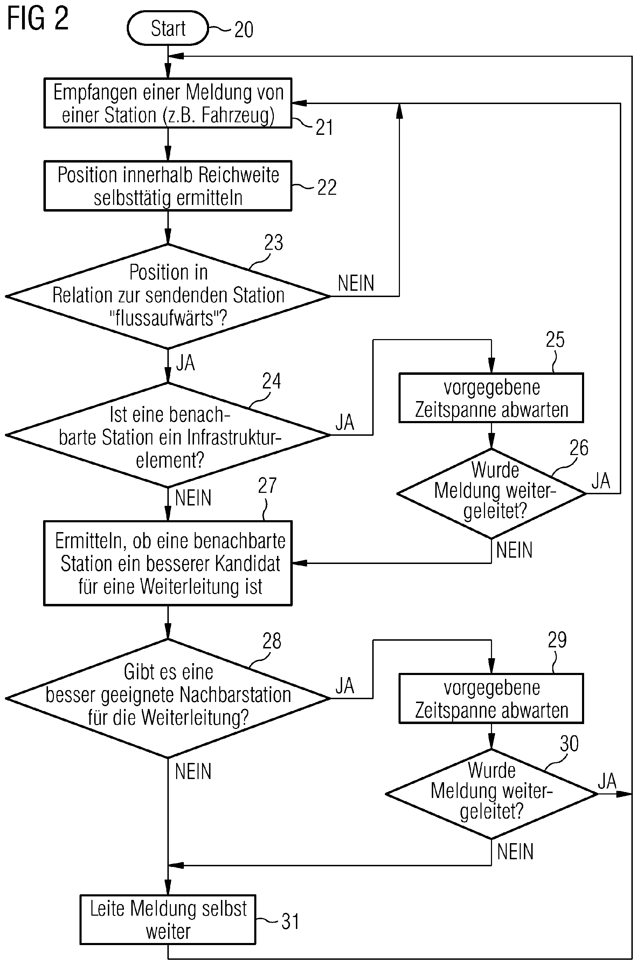

Figur 2 zeigt nun beispielhaft und schematisch den Ablauf des erfindungsgemäßen Verfahrens für ein optimales Weiterleiten von Meldungen in einem funktechnisch eingeschränkten Raum wie z.B. bei Car-to-X-Kommunikation. Das Verfahren wird dabei mit einem Startschritt 20 begonnen.

In einem zweiten Verfahrensschritt 21 wird von einer empfangenden Station (z.B. Fahrzeug, Infrastrukturelement) auf den Empfang einer Meldung gewartet, welche von einer anderen sendenden Station (z.B. Fahrzeug, Infrastrukturelement) ausgesandt wird. Diese Meldungen können beispielsweise Warnungen, Informationen über Verkehrssituation, etc.) beinhalten. Zusätzlich zum Warten auf Meldungen kann im zweiten Verfahrensschritt 21 auch auf den Empfang von Bakeninformationen (z.B. Entfernungen zu Nachbarstationen, Sende- und Empfangsleistungen der Nachbarstationen, Geschwindigkeiten, Bewegungsrichtungen, etc.) gewartet werden, welche zusätzlich für eine Ermittlung von wesentlichen Parametern (z.B. Funkkanaleigenschaften, geografische Positionen von Stationen, Geschwindigkeit, Bewegungsrichtung, etc.) für eine Weiterleitung von Meldungen verwendet werden kann.

Wird im zweiten Verfahrensschritt 21 eine Meldung von einer Station empfangen, so wird in einem dritten Verfahrensschritt 22 von der empfangenden Station selbsttätig eine Position dieser empfangenden Station innerhalb einer Reichweite jener Station ermittelt, von welcher die Meldung versendet worden ist. Um die Position selbsttätig zu bestimmen, wird von der empfangenden Station eine Signalstärke der empfangenen Meldung herangezogen. Dabei wird für eine Ermittlung der Position innerhalb der Reichweite von der empfangenden Station beispielsweise eine Differenz zwischen der Signalstärke der empfangenen Meldung und einer bekannten mindestens notwendigen Empfangsleistung der empfangenden Station gebildet und verwendet. Zusätzlich können von der empfangenden Station im dritten Verfahrensschritt 22 z.B. mit Hilfe eines so genannten Global Navigation Satellite System (GNSS) Parameter wie beispielsweise Bewegungsrichtung in Relation zur sendenden Station, Abstand von der sendenden Station, relative Geschwindigkeit zur sendenden Station, etc. ermittelt werden.

Anhand der im dritten Verfahrensschritt 22 bestimmten Position der empfangenden Station und der ermittelten Parameter wird in einem vierten Verfahrenschritt 23 abgefragt, ob sich die empfangende Station in Relation zur sendenden Station flussaufwärts befindet. Flussaufwärts bedeutet beispielsweise bei Fahrzeugen 10 bis 19 wie in Figur 1 dargestellt, dass ein empfangendes Fahrzeug 10 bis 19 auf die sendenden Station zu bewegt wird, wenn sich das empfangende Fahrzeug 10 bis 19 auf der selben Fahrbahn wie die sendende Station befinden, bzw. dass das empfangende Fahrzeug auf der Gegenfahrbahn von der sendenden Station wegbewegt wird. Wird im vierten Verfahrensschritt 23 festgestellt, dass die Position der empfangenden Station in Relation zur sendenden Station nicht flussaufwärts gelegen ist, so wird wieder der zweite Verfahrensschritt 21 von der empfangenden Station aufgerufen. Von der Station wird dann auf den Empfang neuer Meldungen gewartet, da ihre derzeitige Position für eine optimale Weiterleitung der empfangenen Meldung ungeeignet ist.

Befindet sich die empfangende Station allerdings in Relation zur sendenden Station flussaufwärts, so wird im fünften Verfahrensschritt 24 geprüft, ob ein der benachbarten Stationen innerhalb der Reichweite der sendenden Station ein Infrastrukturelement RSU (z.B. Ampel, Verkehrsschild, etc.) ist, welches z.B. aufgrund stationärer Installation bessere Voraussetzungen (z.B. Funkrichtung, Sendleistung, Antenne mit Richtcharakteristik, etc.) aufweisen kann.

Wird im fünften Verfahrensschritt 25 ein Infrastrukturelement RSU als benachbarte Station festgestellt, so wird in einem sechsten Verfahrensschritt 25 dem Infrastrukturelement RSU ein Vorrang für das Weiterleiten der Meldung gelassen. Von der empfangenden Station wird dabei eine vorgegebene Zeitspanne (z.B. 2 bis 5 Millisekunden) abgewartet, ob die Meldung vom Infrastrukturelement RSU weitergeleitet wird. Eine Prüfung der Weiterleitung wird im siebenten Verfahrensschritt 26 von der empfangenden Station durchgeführt. Ergibt der siebenten Verfahrensschritt 26 dabei, dass die Meldung vom Infrastrukturelement RSU weitergesandt worden ist, so ist für die empfangende Station das Verfahren beendet. Von der empfangenden Station wird zum zweiten Verfahrensschritt 21 zurückgegangen und gewartet, ob neue Meldungen für eine mögliche Weiterleitung empfangen werden.

Wird im siebenten Verfahrensschritt 26 festgestellt, dass die Meldung vom Infrastrukturelement RSU innerhalb der vorgegebenen Zeitspanne nicht weitergeleitet worden ist, wird von der empfangenden Station mit einem achten Verfahrensschritt 27 fortgesetzt. Der achte Verfahrensschritt 27 wird von der empfangenden Station auch dann ausgeführt, wenn im fünften Verfahrensschritt 25 kein Infrastrukturelement RSU als benachbarte Station innerhalb der Reichweite der sendenden Station vorgefunden wird.
Im achten Verfahrensschritt 27 wird von der empfangenden Station aufgrund der ermittelten Position innerhalb der Reichweite der sendenden Station geprüft, ob benachbarte Station besser geeignete Kandidaten für eine Weiterleitung der Meldung sind. Für jede benachbarte Station kann von der empfangenden Station beispielsweise ein Abstand der sendenden Station zu einer jeweiligen Nachbarstation der empfangenden Station, eine Signaldämpfung zwischen der sendenden Station zu einer jeweiligen Nachbarstation der empfangenden Station und/oder eine von einer Nachbarstation empfangene Signalstärke der Meldung aufgrund der Signaldämpfung berechnet werden. Als Basis für diese Berechungen können beispielsweise Bakeninformationen (z.B. Entfernungen zu Nachbarstationen, Sende- und Empfangsleistungen der Nachbarstationen, Geschwindigkeiten, Bewegungsrichtungen, etc.), welche zwischen den Station ausgetauscht werden, oder Information aufgrund des GNSS verwendet werden.

Weiters kann im achten Verfahrensschritt 27 anhand der angeführten Berechungen ermittelt werden, ob eine benachbarten Stationen in Relation zur sendenden Station weiter flussaufwärts gelegen ist als die empfangende Station. Dabei wird auch geprüft, ob von dieser benachbarten Station die Meldung noch vollständig empfangen worden ist. Denn dadurch wird von dieser benachbarten Station ein besser geeigneter Kandidat zur Weiterleitung der Meldung dargestellt, da diese näher am Rand der Reichweite der sendenden Station gelegen ist.

In einem neunten Verfahrensschritt 28 wird dann geprüft, ob es eine zur Weiterleitung besser geeignete, benachbarte Station - d.h. näher am Rand der Reichweite der sendenden Station gelegen bzw. einen größeren Abstand in Richtung flussaufwärts von der sendenden Station aufweisend - gibt. Wird von der empfangenden Station eine derartige benachbarte Station gefunden, so wird in einem zehnten Verfahrensschritt 29 eine vorgegebene Zeitspanne (z.B. 2 bis 5 Millisekunden) abgewartet und dann nach Ablauf der Zeitspanne in einem elften Verfahrensschritt 30 geprüft, ob die Meldung weitergesandt worden ist.

Wird im neunten Verfahrensschritt 29 keine besser geeignet benachbarte Station gefunden, so werden der zehnte Verfahrensschritt 29 und der elften Verfahrensschritt 30 übersprungen. Es wird dann in einem zwölften Verfahrensschritt 31 die Meldung von der empfangenden Station selbst ausgesandt, da von dieser Station erkannt worden ist, dass sie am günstigsten (z.B. am weitesten flussaufwärts entfernt von der sendenden Station) innerhalb der Reichweite der sendenden Station gelegen ist.

Wird beim Ausführen des elften Verfahrensschritts 30 von der empfangenden Station festgestellt, dass die Meldung von einer anderen bzw. benachbarten Station weitergesandt worden ist, so ist für die empfangende Station der Verfahrensdurchlauf beendet. Von der empfangenden Station wird zum zweiten Verfahrensschritt 21 zurückgegangen und auf dem Empfang von neuen Meldungen bzw. von Bakeninformation gewartet.

Wurde die Meldung im elften Verfahrensschritt 30 von keiner anderen Station innerhalb der Reichweite der sendenden Station weitergeleitet, so wird die Meldung im zwölften Verfahrensschritt 31 von der empfangenden Station selbst ausgesandt.

Durch die Weiterleitung der Meldung wird die empfangende Station zur neuen sendenden Station innerhalb deren Reichweite von Stationen selbsttätig festgestellt wird, welche Station am besten für eine Weiterleitung der Meldung geeignet ist. Für die empfangende Station ist nach dem Versand der Meldung das Verfahren beendet. Von der empfangenden Station wird dann wieder in einen Wartezustand gegangen und auf neuen Meldungen bzw. Bakeninformation von Stationen gewartet.

## Patentansprüche

1. Verfahren für ein optimales Weiterleiten von Meldungen in einem funktechnisch eingeschränkten Raum, insbesondere für Car-to-x-Kommunikation, wobei das Weiterleiten von Meldungen von Stationen durchgeführt wird, welche sowohl Sender als auch Empfänger der Meldungen sind,
wobei von jeder empfangenden Station, welche innerhalb einer Reichweite einer sendenden Station gelegen ist, aus einer Signalstärke der empfangenen Meldungen in Kombination mit einer periodischen Aktualisierung einer Umgebungsinformation auf Basis einer so genannten Bakeninformation, durch welche zumindest Positionsdaten, Fahrtrichtung, Geschwindigkeit und Sendeleistung zwischen benachbarten Stationen ausgetauscht werden, selbsttätig eine jeweilige Position innerhalb der Reichweite der sendenden Station ermittelt wird (21, 22),
wobei von jeder Station ein Weiterleitungsverhalten der benachbarten Stationen überwacht wird (28),
wobei wenn innerhalb einer vorgegebenen Zeitspanne von keiner der benachbarten Stationen eine empfangene Meldung weitergeleitet wird (30), eine Weiterleitung der empfangenen Meldung nur von jener empfangenden Station selbst durchgeführt wird (31), von welcher anhand der Signalstärke und der mit den benachbarten Stationen ausgetauschten Umgebungsinformation festgestellt wird, dass sie am Rand der Reichweite der sendenden Station gelegen ist (24, 27, 28),
und wobei die Zeitspanne bis zur Weiterleitung der empfangenen Meldung in Abhängigkeit von der Signalstärke der empfangenen Meldung bestimmt wird.

2. Verfahren nach Anspruch 1, **dadurch gekennzeichnet**, da ss für eine Bestimmung der jeweiligen Position der empfangenden Station innerhalb der Reichweite der sendenden Station eine Differenz zwischen der empfangenen Signalstärke der Meldung und einer bekannten mindestens notwendiger Empfangsleistung der empfangenden Station verwendet wird (22, 23).

3. Verfahren nach einem der vorangegangenen Ansprüche,
**dadurch gekennzeichnet, dass** zusätzlich eine Bestimmung einer Entfernung der empfangenden Station von der sendenden Station mit Hilfe eines so genannten Global Navigation Satellite System oder GNSS durchgeführt wird.

4. Verfahren nach einem der vorangegangenen Ansprüche,
**dadurch gekennzeichnet, dass** die Sendeleistung einer Meldung von der jeweils sendenden Station anhand einer Priorität der Meldung bestimmt wird.

5. Verfahren nach einem der vorangegangenen Ansprüche,
**dadurch gekennzeichnet, dass** eine Entscheidung über die Weiterleitung der Meldung durch einen Typ der Station bestimmt wird (24).

6. Verfahren nach einem der vorangegangenen Ansprüche,
**dadurch gekennzeichnet, dass** eine Entscheidung über die Weiterleitung der Meldung durch den Typ einer benachbarten Station bestimmt wird (24, 28).

7. Verfahren nach einem der vorangegangenen Ansprüche,
**dadurch gekennzeichnet, dass** Fahrzeuge und/oder so genannte Road Side Units als Typen von Stationen eingesetzt werden.

8. Verfahren nach einem der vorangegangenen Ansprüche,
**dadurch gekennzeichnet, dass** für einen Versand von Meldungen Antennen mit Richtcharakteristik, insbesondere so genannte Smart Antennas, eingesetzt werden, von welchen der Versand der Meldungen in zumindest eine bevorzugte Richtung gelenkt wird.

## Claims

1. Method for optimal forwarding of messages in a radio-technically restricted space, in particular for car-to-X communication, wherein the forwarding of messages is carried out by stations which are both transmitters and receivers of the messages, wherein a respective position within the range of the transmitting station is automatically determined (21, 22), by each receiving station which is located within a range of a transmitting station, from a signal strength of the received messages in combination with a periodic update of environmental information based on so-called beacon information, by which at least position data, direction of travel, speed and transmission power are exchanged between adjacent stations, wherein a forwarding behaviour of the adjacent stations is monitored (28) by each station, wherein if, within a predetermined time period a received message is forwarded (30) by none of the adjacent stations, a forwarding of the received message is carried out (31) only by the receiving station by which it is established, based on the signal strength and the environmental information exchanged with the adjacent stations, that it is located at the edge of the range of the transmitting station (24, 27, 28),
and wherein the time period until the forwarding of the received message is determined as a function of the signal strength of the received message.

2. Method according to claim 1, **characterised in that** a difference between the received signal strength of the message and a known minimum necessary reception power of the receiving station is used (22, 23) for determining the respective position of the receiving station within the range of the transmitting station.

3. Method according to one of the preceding claims, **characterised in that** in addition a determination of a distance of the receiving station from the transmitting station is carried out with the aid of a so-called Global Navigation Satellite System or GNSS.

4. Method according to one of the preceding claims, **characterised in that** the transmission power of a message is determined by the respective transmitting station based on a priority of the message.

5. Method according to one of the preceding claims, **characterised in that** a decision on forwarding the message is determined (24) by the type of the station.

6. Method according to one of the preceding claims, **characterised in that** a decision on the forwarding of the message is determined (24, 28) by the type of an adjacent station.

7. Method according to one of the preceding claims, **characterised in that** vehicles and/or so-called roadside units are used as types of stations.

8. Method according to one of the preceding claims, **characterised in that** for dispatching messages use is made of antennas with directional characteristics, in particular so-called smart antennas, by which the dispatch of the messages is directed in at least one preferred direction.

## Revendications

1. Procédé de retransmission optimale de messages dans un espace restreint en termes radio, en particulier pour une communication car-to-x, la retransmission de messages étant effectuée par des stations qui sont non seulement des émetteurs, mais aussi des récepteurs des messages, chaque station réceptrice située dans le rayon d'une station émettrice déterminant (21, 22) automatiquement une position respective dans le rayon de la station émettrice à partir d'une intensité de signal des messages reçus en combinaison avec une mise à jour périodique d'une information environnementale sur la base d'une information dite de balise permettant d'échanger, entre stations voisines, au moins des données de position, le sens du déplacement, la vitesse et la puissance d'émission, chaque station surveillant (28) un comportement de retransmission des stations voisines, une retransmission du message reçu n'étant effectuée (31), si un message reçu n'a été retransmis (30) par aucune des stations voisines dans un laps de temps prédéfini, que par la station réceptrice qui a constaté, sur la base de l'intensité de signal et de l'information environnementale échangée avec les stations voisines, qu'elle se trouve (24, 27, 28) au bord du rayon de la station émettrice et le laps de temps jusqu'à la retransmission du message reçu étant déterminé en fonction de l'intensité de signal du message reçu.

2. Procédé selon la revendication 1, **caractérisé en ce que**, pour une détermination de la position respective de la station réceptrice dans le rayon de la station émettrice, une différence entre l'intensité de signal du message reçue et une puissance de réception minimale nécessaire connue de la station réceptrice est utilisée (22, 23).

3. Procédé selon l'une des revendications précédentes, **caractérisé en ce qu'**est en outre effectuée une détermination de la distance entre la station réceptrice et la station émettrice à l'aide de ce qu'il est convenu d'appeler un système GNSS, Global Navigation Satellite System.

4. Procédé selon l'une des revendications précédentes, **caractérisé en ce que** la puissance d'émission d'un message est déterminée par la station respectivement émettrice sur la base d'une priorité du message.

5. Procédé selon l'une des revendications précédentes, **caractérisé en ce qu'**une décision de retransmission du message est établie (24) par un type de station.

6. Procédé selon l'une des revendications précédentes, **caractérisé en ce qu'**une décision de retransmission du message est établie (24, 28) par le type d'une station voisine.

7. Procédé selon l'une des revendications précédentes, **caractérisé en ce que** sont utilisés, en tant que types de stations, des véhicules et/ou ce qu'il est convenu d'appeler des Road Side Units.

8. Procédé selon l'une des revendications précédentes, **caractérisé en ce que** sont utilisées, pour l'émission de messages, des antennes avec caractéristique directionnelle, en particulier des antennes dites intelligentes, qui dirigent l'émission des messages dans au moins une direction préférentielle.
